# EUROPEAN PATENT APPLICATION

(11) **EP 3 604 733 A1**
(43) Date of publication of application: **05.02.2020**
(21) Application number: 18186437.2
(22) Date of filing: 30.07.2018
(51) Int. Cl.: E21B 43/00, E21B 43/16, H01M 8/1246, B01D 53/04, H01M 8/0612, H01M 8/0668, H01M 8/124

(54) **METHOD AND SYSTEM FOR REMOVING CARBON DIOXIDE**

(71) Applicant: EZ-Energies GmbH, 86150 Augsburg (DE)
(72) Inventor: Itani, Rachad, 86150 Augsburg (DE); Koch, Tobias, 86156 Augsburg (DE); Ravagni, Alberto, 6340 Baar (CH); BUCHELI, Olivier, 6043 Adligenswil (CH); Alyousef, Yousef M., 11442 Riyadh (SA)
(74) Representative: Dr. Graf & Partner AG

(57) **Abstract**

The method and system for removing CO₂ comprising the steps of, feeding a solid oxide fuel cell (SOFC) system (2) with a gaseous hydrocarbon feed (100), converting the gaseous hydrocarbon feed (100) in the SOFC system (2) into an anode exhaust stream (101) comprising carbon dioxide CO₂, the SOFC system (2) thereby producing electricity (6); injecting the anode exhaust stream (101) as an injection gas (105) into an underground coal bed (74); in the underground coal bed (74) the injection gas (105) causing coal bed methane (CBM) to desorb from the coal and CO₂ to adsorb onto the coal; extracting the coal bed methane (CBM) from the underground coal bed (74); and discharging a production gas (108) comprising the coal bed methane (CBM) from the underground coal bed (74).

## Description

### Field of the Invention

The field of invention relates to a method and a system for removing carbon dioxide.

### Background of the Invention

Global warming, triggered by a substantial increase in anthropogenic CO₂ and other greenhouse gas emissions into the atmosphere, represents one of the most pressing existential threats to civilization and to life on earth. Humanity must therefore urgently redirect its efforts and resources to reducing CO₂ emission and to removing excess anthropogenic CO₂ that has already been released into the atmosphere.

### Technical Problem to be solved

The objective of the present invention is an improved method and system for removing carbon dioxide CO₂. A further objective of the present invention is to provide an energy-efficient method and system that allows removing high amounts of CO₂ from the atmosphere. A further objective of the present invention relates to a method for generating electrical energy by consumption of hydrocarbons, whereby the consumption does not result in any net emission of CO₂ into the atmosphere or even removes CO₂ from the atmosphere. A further objective of the present invention relates to a method for the production of methane. The consumption of such produced methane does not increase the net CO₂ content in the atmosphere.

### Summary of the Invention

The above-identified objectives are solved by a method comprising the features of claim 1 and more particular by a method comprising the features of claims 2 to 10. The above-identified objectives are further solved by a system comprising the features of claim 11 and more particular by a system comprising the features of claims 12 to 14.

The objectives are in particular solved by a method for removing CO₂ comprising the steps of, feeding a solid oxide fuel cell SOFC system with a gaseous hydrocarbon feed, converting the gaseous hydrocarbon feed in the SOFC system into an anode exhaust stream comprising carbon dioxide CO₂, the SOFC system thereby producing electricity; injecting the anode exhaust stream as an injection gas into an underground coal bed; in the underground coal bed the injection gas causing coal bed methane to desorb from the coal and CO₂ to adsorb onto the coal; extracting the coal bed methane from the underground coal bed; and discharging a production gas comprising the coal bed methane from the underground coal bed.

The objectives are in particular further solved by a system for removing CO₂ comprising a gaseous hydrocarbon source, a first well, a second well, and an SOFC system comprising a solid oxide fuel cell with an anode side, a cathode side and an electrical output, wherein the first well fluidly connecting an inlet with a coal bed, wherein the second well fluidly connecting the coal bed with an outlet, wherein the output of the anode side of the Solid oxide fuel cell is fluidly connected with the inlet, to provide the coal bed with CO₂, and wherein the input of the anode side is fluidly connected with the gaseous hydrocarbon source .

Coal bed methane (CBM) is a form of natural gas extracted from coal beds also known as coal seams. The term CBM refers to methane adsorbed into the solid matrix of the coal. Coal bed methane is distinct from typical sandstone or other conventional gas reservoir, as the methane is stored within the coal by a process called adsorption. The methane is in a near-liquid state, lining the inside of pores within the coal, called the matrix. The open fractures in the coal, called the cleats, can also contain free gas or can be saturated with water. Unlike much natural gas from conventional reservoirs, coal bed methane contains very little heavier hydrocarbons such as propane or butane, and no natural-gas condensate. Methane gas recovered from coal beds, commonly referred to as CBM, currently amounts to about 10% of the natural gas production in the United States. The CBM is traditionally produced through depressurization by pumping out water from coal beds. However one disadvantage of using depressurization is that only a small fraction of the CBM is economically recoverable. More specifically, depressurization is limited to higher permeability coal beds. This is because as water pressure is decreased, mostly methane molecules that are not adsorbed within the coal matrix are recovered, and coal cleats may collapse and decrease the permeability of the coal bed.

An exemplary embodiment of the present invention provides a system for generating a gas suitable for the production of CBM from a coal bed. The system comprises a Solid Oxide Fuel Cell system comprising a Solid Oxide Fuel Cell (SOFC) that receives a gaseous hydrocarbon feed to produce an anode exhaust stream comprising CO₂. The anode exhaust stream preferably contains a high amount of CO₂. In addition, the SOFC also produces electricity when converting the gaseous hydrocarbon feed. In an exemplary embodiment, the anode exhaust stream is injected as an injection gas into the coal bed, to cause CBM to desorb from the coal, and to produce a production gas that includes methane.

As an alternative to, or in conjunction with depressurization, the method and system according to the invention allow improved recovery of CBM by injecting at least the anode exhaust stream of the SOFC as injection gas into the coal bed. Most preferably the method and system according to the invention is used for recovery of CBM from deep coal beds, in particular non-minable coal beds. In a preferred embodiment depressurization of the coal bed is avoided by pressurizing the injection gas before injecting it into the coal bed, thus avoiding coal cleats to collapse, to maintain permeability of the coal bed, which is particularly important when recovering CBM from deep coal beds.

Most preferably, CO₂ is used as injection gas to enhance the production of CBM. CO₂ has a stronger chemical bond with coal than CBM. A minimum of two CO₂ molecules thus displace one CH₄ molecule and adsorbs on the coal surface permanently in its place. The displaced CH₄ (methane) can thus be recovered as a free-flowing gas, and most important, the two CO₂ molecules are permanently bound in its place in the coal bed, thus sequestering at least a portion of the CO₂ of the injection gas. The method and system according to the invention thus allow permanent removal of CO₂ contained in the injection gas stream from above the earth's surface, especially from the atmosphere.

In other applications, nitrogen (N₂), which less strongly adsorbs onto coal than CBM, may be used in combination with CO₂ depending on coal rank and coal bed characteristics, such as depth, pressure, etc. Coinjection of N₂ can maintain the coal bed at relatively high pressures and hence support permeability by keeping the cleat system open. To enrich the injection gas with nitrogen, most preferably, the anode exhaust stream and the cathode exhaust stream of the SOFC are at least partially mixed. Most preferably this allows controlling the proportion of N₂ and CO₂ in the injection gas.

The production gas produced from the coal bed may for example be combusted, may be fed into a public gas grid, or may be consumed by SOFC fuel cells to generate electrical power and CO₂. The CO₂ may then be used to provide the injection gas.

One advantage of the invention is that a large amount of CO₂ may be produced locally by the SOFC system. Known methods for CBM recovery are generally limited by the availability of a suitable gas for injection in sufficient amounts. Further, the cost of separation to isolate gases, for example CO₂, from either the produced gases or the atmosphere may be prohibitively expensive. After separation, the gases may need substantial compression (e.g., 200 bar or more depending on subsurface depth) for injection into a formation. Thus, the method and system according to the invention allow versatile and cost-effective recovery of coal bed methane (CBM) and, most important, allow reducing CO₂ emission and allow sequestering CO₂ in the coal bed.

An exemplary embodiment of the present invention provides an energy-efficient method and system that allows removing high amounts of CO₂, most preferably CO₂ from the atmosphere, and producing electrical power. In addition, as a by-product, the SOFC system also produces water (H₂O). The method includes providing a gaseous hydrocarbon feed from a carbonaceous waste material, preferably biomass, and converting the gaseous hydrocarbon feed in the SOFC system into an anode exhaust stream comprising CO₂, whereby the SOFC system produces electricity. The anode exhaust stream is injected as injection gas into the coal bed to cause coal bed methane CBM to desorb from the coal and CO₂ to adsorb onto the coal, thus sequestering CO₂ previously stored in the biomass.

In a preferred embodiment the SOFC system may also produce heat, in particular high quality recoverable thermal energy, and pure water in form of steam. The steam can be condensed and may be recovered as water (H₂O), for example for residential or industrial usage.

Depending on the amount of biomass processed to biogas, the method allows removing high amount of CO₂ from the atmosphere.

Biogas is derived from organic material, the biomass. Usually biogas is harvested by processing biomass in such a way that encourages microorganisms to digest the organic material in a process that produces gas as a result. This process is known as anaerobic digestion. The anaerobic digestion process occurs naturally with waste comprising biomass due to the lack of oxygen. This digestion process produces primarily methane and carbon dioxide. Methane is up to 70 times more damaging as a greenhouse gas than CO₂ because methane has a Global Warming Potential (GWP) factor of 70, compared with CO₂. Instead of allowing the harmful methane of the biogas to escape into the atmosphere and contribute to the greenhouse effect, in a preferred embodiment of the invention the biogas is collected and is then purified from polluting gases, before the purified biogas is fed as the gaseous hydrocarbon feed to the SOFC system. Such purified biogas comprises for example about 50% to 60% CH₄ and about 40 to 50 % CO₂, along with other minor gas impurities. One advantage of the SOFC system is that such a relatively high amount of CO₂ is of not disadvantage in the SOFC cell. The CO₂ in the gaseous hydrocarbon feed flows through the anode side of the SOFC cell without reaction. Preferably most of the methane in the gaseous hydrocarbon feed is converted in the SOFC cell to CO₂, so that the anode exhaust stream, which is used as the injection gas, has a high amount of CO₂, whereby the SOFC cell is generating electricity, preferably with an electrical efficiency of more than 50%. The injection gas is then injected into a coal bed, where the CO₂ displaces CBM. In an advantageous embodiment, the production gas comprising CBM may be fed to the anode side of the SOCF system, so that the production gas is converted into electricity, and the CO₂ produced in the SOFC cell may be injected into the coal bed. In a further advantageous embodiment the production gas comprising CBM may, after cleaning, be fed as pipeline gas, for example into a public gas grid.

The technology according to the invention provides a Solid Oxide Fuel Cell (SOFC) system for generating an anode exhaust stream, which is used as an injection gas, comprising carbon dioxide suitable for the production of CBM from a coal bed, to provide a production gas. In an exemplary embodiment, the production gas including CBM is used as the gaseous hydrocarbon feed and is fed to the SOFC cell. Therefore, in a preferred embodiment no separate hydrocarbon source is needed to run the method according to the invention, because the gaseous hydrocarbon feed is obtained from the coal bed. In an exemplary embodiment, the system and method is provided as a closed loop system, in that the production gas obtained from the coal bed is fed as the gaseous hydrocarbon feed to the solid oxide fuel cell, and the anode exhaust stream is fed back as the injection gas to the coal bed. The solid oxide fuel cell in addition produces electricity. Such a system may have reduced or zero CO₂ emissions as compared to straight combustion of hydrocarbons from the hydrocarbon source. The system may include a converter configured to convert the anode exhaust stream into a gas mixture comprising at least CO₂ and N₂. The system may include an injection well configured to inject the injection gas into the coal bed, which is the same as the coal bed producing the production gas, and a production well configured to harvest the production gas from the coal bed, wherein the production gas comprises CBM, which means CH₄.

In an exemplary embodiment, the system and method is provided as an open loop system, in that the gaseous hydrocarbon feed for the SOFC system is obtained from a natural gas reservoir, an oil reservoir, an additional coal bed, a waste processing facility, or any combinations thereof. Preferably the gaseous hydrocarbon feed may include or may consist of a carbonaceous waste material, most preferably biomass. The production gas from the coal bed may for example be used for producing power, such as electricity or steam, or may for example be fed into the public gas supply system.

A treatment system may be included in the system to treat the production gas to remove water, particulates, heavy-end hydrocarbons, or any combinations thereof so that the purified production gas becomes the gaseous hydrocarbon feed. A compressor may be used to increase the pressure of the production gas. A pipeline may be used to convey the production gas to the SOFC system and/or convey the injection gas to the well.

Traditional means for generating power from fossil fuels have typically resulted in the emission of CO₂ into the atmosphere, contributing to the problem of Global Warming. To address the problem at the source of Global Warming, the method and system according to the invention relates to generation of power using methods that do not result in the emission of CO₂ into the atmosphere and/or may remove CO₂ from the atmosphere.

An exemplary embodiment of the present invention provides a method of producing electrical power with low or no CO₂ emissions by converting the production gas in the SOFC system into an anode exhaust stream comprising CO₂, injecting the anode exhaust stream as the injection gas into the coal bed to sequester the CO₂ in the coal bed and thereby producing the production gas which is fed to the SOFC system. The method allows producing electrical power with low or no CO₂ emissions.

Another exemplary embodiment of the present technology includes a system for generating power from a coal bed. The system includes providing a gaseous hydrocarbon feed, for example based on a hydrocarbon source such as a carbonaceous waste material, preferably biomass, and converting the gaseous hydrocarbon feed in the SOFC system into an anode exhaust stream comprising CO₂ and H₂, whereby the SOFC system produces electricity, and whereby the H₂ is preferably separated, so that the injection gas mostly comprises CO₂. The system includes an injection well configured to inject at least a portion of the anode exhaust stream as an injection gas into a coal bed, wherein the CBM is desorbed from the coal bed. The system may also include a production well configured to harvest a production gas from the coal bed, wherein the production gas comprises CBM. A power plant may be configured to combust at least a portion of the production gas to generate power. The power plant may include a burner, a boiler, a steam turbine, a gas turbine, an exhaust heat recovery unit, an electrical generator, or any combinations thereof. A power plant may comprise an SOFC system to convert at least a portion of the production gas to electrical power and CO₂ using an SOFC cell.

Another exemplary embodiment of the present invention provides a method of adding additional gases to the injection gas, such as N₂, to for example influence the CBM recovery rate. For CBM production through this method preferred ratios of N₂ to CO₂ may be as follows:
- For low rank coal, a preferred mixture of the injection gas may be 20% N₂ and 80% CO₂, which increases CBM recovery rate by 69% compared to 100% CO₂, however with a loss of 27% in sequestration capacity.
- For medium rank coal, a preferred mixture of the injection gas may be 30% N₂ and 70% CO₂, which increases CBM recovery rate by 95% compared to 100% CO₂ injection, however with a loss of 20% in sequestration capacity;
- For high rank coal, a preferred mixture of the injection gas may be 45% N₂ and 55% CO₂, which increases CBM recovery rate by 95% compared to 100% CO₂ injection, however with a loss of 20% in sequestration capacity.

In an exemplary embodiment the amount of CO₂ and N₂ in the injection gas may be varied by at least partially oxidizing the anode exhaust stream leaving the SOFC system using air. In an exemplary embodiment the amount of CO₂ in the anode exhaust stream leaving the SOFC system may be varied by varying the fuel utilization rate of the SOFC system, to thereby vary the amount of CO₂ in the injection gas. In an exemplary embodiment the amount of CO₂ in the injection gas may be increased by feeding the anode exhaust stream leaving the SOFC system into a second SOFC system, to thereby convert residual gas of the anode exhaust stream, such as H₂, to thereby increase the amount of CO₂ in the anode exhaust stream leaving the second SOFC system, so that the CO₂ amount of the injection gas is increased.

The method and system according to the invention using biogas have the following advantages:
- Compared to conventional methods, which only burn the methane contained in the biogas, thereby for example producing heat, electricity and CO₂, the system and method according to the invention allow the CO₂ to be removed from the atmosphere.
- Despite the relatively high content of CO₂ in biogas, the biogas can efficiently be converted into electricity in the SOFC cell, without the usual loss of electrical efficiency which occurs with conventional combustion engines, in particular due to the high content of CO₂ in biogas.
- CO₂ capture through biomass is cheap and preferably cost neutral. The technology to produce biogas from biomass is well establish, easy to handle, and may be used decentralized.
- A high amount of CO₂ in the anode exhaust stream, preferably about 100% of the CO₂, may be sequestered in the coal bed. Therefore, both the CO₂ contained in the biogas and the CO₂ produced in the SOFC cell may easily be captured and sequestered in the coal bed.
- In a preferred embodiment a unit comprising the SOFC system can be built as a portable unit, and can, for example, be arranged in a portable container. The system according to the invention can therefore be located at any desired geographic location without the need for a CO₂ pipeline network, nor the need of electrical power or water.
- The electrical energy generation can be installed decentralized in containers, therefore only cheap power transmission is required to transfer the electrical energy to a specific location.
- Biogas is of inferior quality than natural gas or CBM because biogas is diluted by CO₂. The SOFC system according to the invention is particularly suitable to be operated with biogas, because the CO₂ in biogas hardly effects the conversion of CH₄ in the SOFC system. The method and system therefore also allow converting low-grade biogas into electrical energy. In addition, the SOFC system may be installed decentralized, and the low-grade biogas may be converted locally into electrical energy.
- CBM can be processed more easily into pipeline gas than biogas. The processing of biogas into pipeline gas is expensive and time-consuming because the CO₂ has to be filtered out. It is therefore more advantageous to feed both, the CO₂ contained in the biogas and the CO₂ produced in the SOFC, into the coal bed, wherein the CO₂ is captured and sequestered, and CBM is released, which may be used as pipeline gas. Burning such pipeline gas in the atmosphere is CO₂ neutral, because the CO₂ was extracted from the atmosphere beforehand.
- If biogas is fed to the SOFC cell, preferably all of the carbon previously absorbed by the plant can be converted to CO₂, and the CO₂ can be sequestered in the coal bed.
- As mentioned a minimum of two CO₂ molecules are needed to displace one CH₄ molecule on the coal surface and adsorb on the coal surface permanently. CO₂ in the atmosphere may therefore be reduced if biogas, after passing the SOFC cell, is fed as the anode exhaust stream into the coal bed, the CO₂ is sequestered in the coal bed thereby releasing CBM, the CBM is fed into the public grid and the CBM is burned, thereby releasing CO₂ into the atmosphere. Burning such pipeline gas in the atmosphere is CO₂ negative, because twice the amount of CO₂ was extracted from the atmosphere beforehand. This means that even if the CBM extracted from a whole coal bed would be fed into the public grid and the CO₂ from the CBM released into the atmosphere, double the amount of CO₂ was extracted from the atmosphere beforehand. The method and system according to the invention therefore allows extracting a high amount of CO₂ from the atmosphere and to permanently sequestering the extracted CO₂ underground.
- Most preferably non-minable coal beds are used for sequestering CO₂ so that no valuable resources are required for sequestration CO₂.
- The production of electricity using biogas and an SOFC cell according to the invention is CO₂ neutral, thereby producing electricity with a high efficiency. The CO₂ emission avoided by the method and system according to the invention may be calculated from the average emissions of electricity generation in the same grid, which for Germany for example is approximately 0.5 t CO₂ per MWh electricity. CO₂ emission may be therefore reduced by a combination of absorption of CO₂ by biomass used for biogas production and by CO₂-free electricity generation with biogas.
- The method and system according to the invention allow for further reducing the CO₂ emission. Optionally the CBM may be fed to the SOFC cell, thereby generating electricity and CO₂, and the CO₂ may be fed back into the coal bed, thus allowing CO₂-free electricity generation by the use of CBM.
- If the CBM is fed into the public grid, the additional CH₄ theoretically can replace other CO₂-intensive fuels such as hard coal, thereby leading to significantly lowering CO₂ emission associated with electricity generation.
- The method and system according to the invention allow CH₄ emissions from the classic production and transport of natural gas to be reduced significantly, including CO₂ emissions associated with maintaining pressure in the pipeline.

Instead of using biogas, the method and system according to the invention may use natural gas or synthesis gas, for example from fossil fuel, non-biological waste or coal, which is fed to the SOFC cell and afterwards fed into the coal bed. Such a method and system may have the following advantages:
- The emission is at least CO₂ neutral. Throughout the life cycle of the SOFC system, the system could emit less CO₂ than a system using photovoltaic or hydropower. Therefore, the use of an SOFC system in combination with CBM production has significant advantages, which are:
- Reduction of additional fossil fuel demand due to 100% efficiency of CO₂ separation.
- Higher efficiency of power generation.
- Little to no loss of energy for CO₂ separation.
- CO₂-free power generation, but no active reduction of CO₂ in air.

Various objects, features, aspects and advantages of the present invention will become more apparent from the following detailed description of preferred embodiments of the invention.

### Brief Description of the Figures

Preferred embodiments of the invention will be described with reference to the following figures, wherein like reference numerals refer to like parts throughout the various figures.
- Fig. 1: is a schematic view of a first embodiment of a system for removing CO₂ and for producing CBM;
- Fig. 2: is a flow diagram of a first process for removing CO₂ and for producing CBM;
- Fig. 3: is a schematic view of a second embodiment of a system for removing CO₂ and for producing CBM;
- Fig. 4: is a flow diagram of a second process for removing CO₂ and for producing CBM;
- Fig. 5: is a schematic view of a further system for removing CO₂ and for producing CBM;
- Fig. 6: is a schematic view of a further system for removing CO₂ and for producing CBM;
- Fig. 7: is a schematic top view of a system for removing CO₂ and for producing CBM;
- Fig. 8: is a process flow diagram of an SOFC system.

### Description of preferred Embodiments

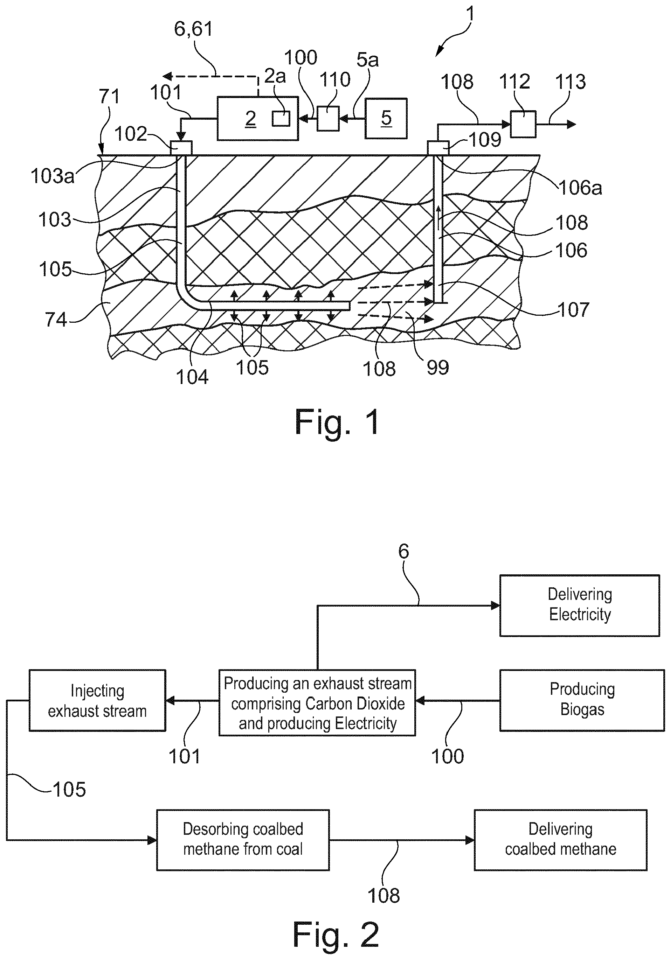

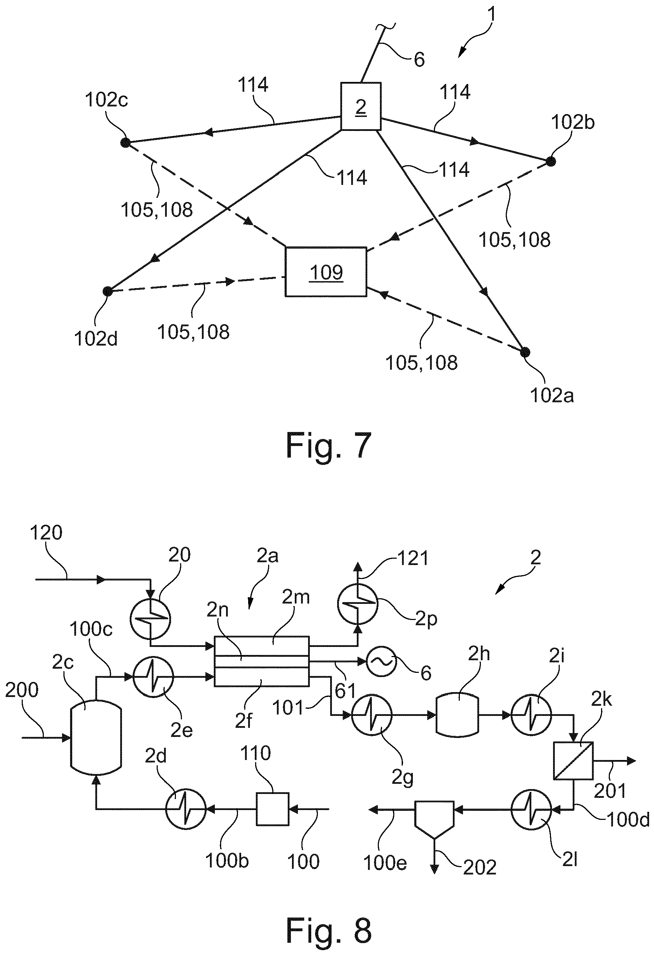

Figure 1 shows a first embodiment of a system 1 and method for removing CO₂ and for producing coal bed methane (CBM). The system 1 comprises an SOFC system 2 comprising a solid oxide fuel cell 2a. An exemplary embodiment of a suitable SOFC system 2 is disclosed in figure 8 in detail. A biogas reactor 5 produces a biogas 5a from biological waste. The biogas 5a is purified in a pre-treatment unit 110 and leaves the pre-treatment unit as a gaseous hydrocarbon feed 100. The gaseous hydrocarbon feed 100 is fed to the anode side of the solid oxide fuel cell 2a. The gaseous hydrocarbon feed 100 is at least partially oxidized in the solid oxide fuel cell 2a, and leaves the solid oxide fuel cell 2a as an anode exhaust stream 101, the solid oxide fuel cell 2a thereby producing electricity 6, 61. The anode exhaust stream 101 serves as an injection gas 105 which through a wellhead 102 and an inlet 103a is injected into a first well 103. The first well 103 may convey the injection gas 105 from the surface 71 to a coal bed 74. As the coal bed 74 may be a narrow geological layer, for example, having a thickness of only a few meters to a few tens of meters, the first well 103 may have a section 104 that is directionally drilled through the coal bed 74, for example, a horizontal section 104 if the coal bed 74 is relatively horizontal. The horizontal section 104 may be perforated to allow the injection gas 105 to enter the coal bed 74.

The CO₂ of the injection gas 105 is used for the production of CBM. CO₂ has a stronger chemical bond with coal than CBM. CO₂ molecules thus displace CH₄ molecules on the coal surface and the CO₂ molecules adsorbs on the coal surface permanently in its place. The displaced CH₄ (methane), which means CBM, can thus be recovered as a free-flowing production gas 108, so that the production gas 108 becomes a gaseous hydrocarbon source 99. The CO₂ molecules are permanently bound in its place in the coal bed, thus sequestering at least a portion of the CO₂ of the injection gas 105. The method and system according to the invention thus allow permanent removal of CO₂ contained in the injection gas stream 105 from above the earth's surface.

A second well 106, for example a production well, may be drilled into the coal bed 74 to harvest the production gas 108, in particular the CBM produced from the coal. As for the first well 103, the second well 106 may be perforated to collect the CBM released from the coal bed 74, and the second well 106 may comprise a horizontal section to follow a narrow coal bed 74, or may have a vertical section 107 only, as indicated in figure 1. The present technology is not limited to horizontal wells, as other embodiments may have different well geometries to follow coal beds at different angles, or may have vertical wells if a coal bed is thick. The wells 103 and 106 may for example be displaced laterally by tens or hundreds of meters. The production gas 108 collected is transported to the surface through the second well 106 with outlet 106a, and through a second wellhead 109.

In a preferred embodiment the production gas 108 may be fed into a public gas grid 113, and the CBM, which is methane, can be burned in the usual way by consumers of the public gas grid 113. One advantage of the embodiment according to figure 1 is that such burning of methane received from the public gas grid 113 is CO₂-neutral, because CO₂ is sequestered in the coal bed 74 before releasing CBM.

In might be advantageous to use a pre-treatment unit 112 to purify the production gas 108 and/or to pressurize the production gas 108 before feeding it into the public gas grid 113. It might be advantageous in the pre-treatment unit 112 to for example reduce the water content by a dehydration device, remove particulates, remove heavy-end hydrocarbons or other contaminants. An analysis unit, such as an automatic gas chromatography analyzer, may be used after the second well head 109 to test the composition of the production gas 108. The results may be used to control the injection rate of the injection gas 105 or the composition of the injection gas 105 through the first well 103, for example, to balance the concentration of N₂ and CBM in the production gas 108, to lower the amount of CO₂ in the production gas 108, or to control CBM recovery based on the best mixture of the injection gas 105, in particular the concentration of CO₂ and N₂.

Figure 2 shows a flow diagram of the basic method used in figure 1. Biogas is produced from biological waste, the biological waste containing CO₂ extracted from the atmosphere. The biogas is fed as a gaseous hydrocarbon feed 100 into an SOFC system, the fuel cell thereby producing an anode exhaust stream 101 comprising CO₂ and producing electricity 6. The electricity 6 is delivered to a user, and the anode exhaust stream is injected as an injection gas 105 into a coal bed 74 to desorbing CBM from coal and thereby producing a production gas 108 comprising CBM, so that CBM is delivered.

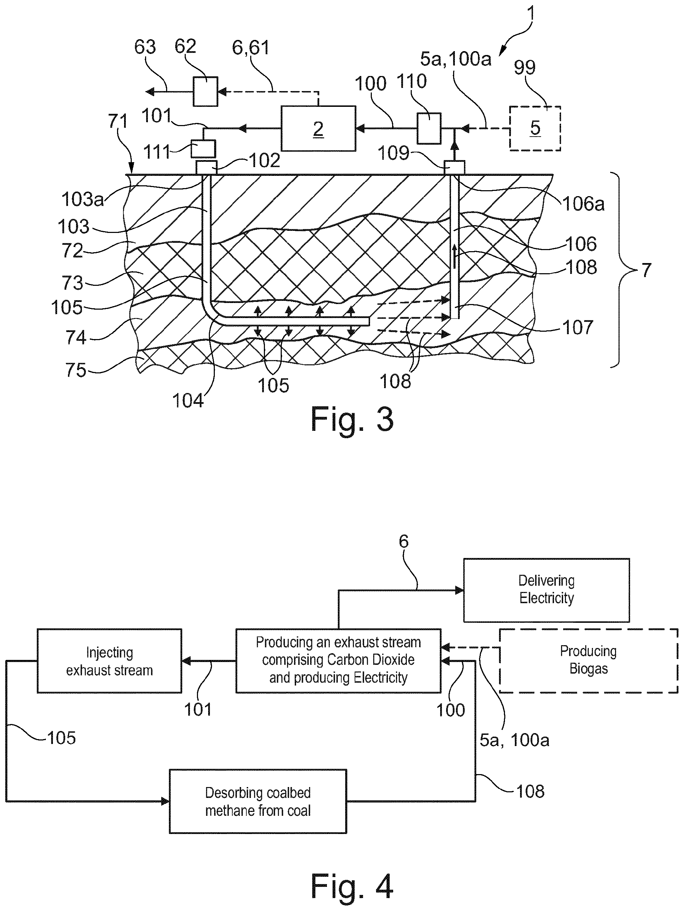

Figure 3 shows a second embodiment of a system 1 and method for removing CO₂ and for producing CBM. In contrast to the embodiment disclosed in figure 1, in the system and method disclosed in figure 3, the production gas 108 is fed back to the SOFC system 2 and used as the gaseous hydrocarbon feed 100, which is fed to the solid oxide fuel cell 2a. The production gas 108 may directly be fed to the solid oxide fuel cell 2a. In an advantageous embodiment the production gas 108 is purified in a pre-treatment unit 110 before feeding the pretreated production gas 108 as the gaseous hydrocarbon feed 100 into the anode side of the solid oxide fuel cell 2a. The solid oxide fuel cell 2a thereby producing electricity 6 and the anode exhaust stream 101. A compressor 111 may be used to compress the anode exhaust stream 101 before feeding it into the first well head 102. The method for feeding the anode exhaust stream 101 into the first well head 102 and for collecting the production gas 108 at the second well head 109 disclosed in figure 3 is the same as already describe with figure 1.

Figure 4 shows a flow diagram of the method used in figure 3. A gaseous hydrocarbon feed 100 is fed into an SOFC system, the fuel cell thereby producing an anode exhaust stream 101 comprising CO₂ and producing electricity 6. The electricity 6 is delivered to a user, and the anode exhaust stream 101 is injected as an injection gas 105 into a coal bed 74 to desorb CBM form coal and thereby producing a production gas 108 comprising CBM, whereby the production gas 108 becomes the gaseous hydrocarbon source that causes the gaseous hydrocarbon feed 100.

Figures 3 and 4 show a closed loop application where the production gas 108 removed from underground becomes the gaseous hydrocarbon fee 100 which is fed to the SOFC system 2. One advantage of this method and system is that the CO₂ produced in the SOFC system 2 is sequestered in a coal bed, which allows the production of electrical energy using coal, but without an emission of CO₂ into the atmosphere.

In a preferred embodiment an additional source of a gaseous hydrocarbon feed 100a is provided for the system and method disclosed in figures 3 and 4. As disclosed in figure 4, biogas 5a may be produced and may be fed as an additional gaseous hydrocarbon feed 100a to the SOFC system 2. Figure 3 shows the biogas reactor 5, providing biogas 5a, which is an additional gaseous hydrocarbon feed 100a, that is fed to the SOFC system 2, and that may, if necessary, in addition be pre-treated in the pre-treatment unit 110. Such an additional source of a gaseous hydrocarbon feed 100a is in particularly desirable to start the process disclosed in figure 4, which means to start producing CO₂, and then to start desorbing CBM from the coal bed, so that the production gas 108 is provided and the SOFC system 2 may produce the anode exhaust stream 101 and electricity 6. After starting the process disclosed in figure 4, the process may become self-sustaining. Most preferably the additional gaseous hydrocarbon feed 100a is fed to the closed loop application to make sure that sufficient CO₂ is delivered to the coal bed 74 to desorbing CBM from coal, in particular in view that a minimum of two CO₂ molecules displace one CH₄ molecule and adsorb on the coal. Instead of biogas, an alternative source for an additional gaseous hydrocarbon feed 100a such as natural gas may be used.

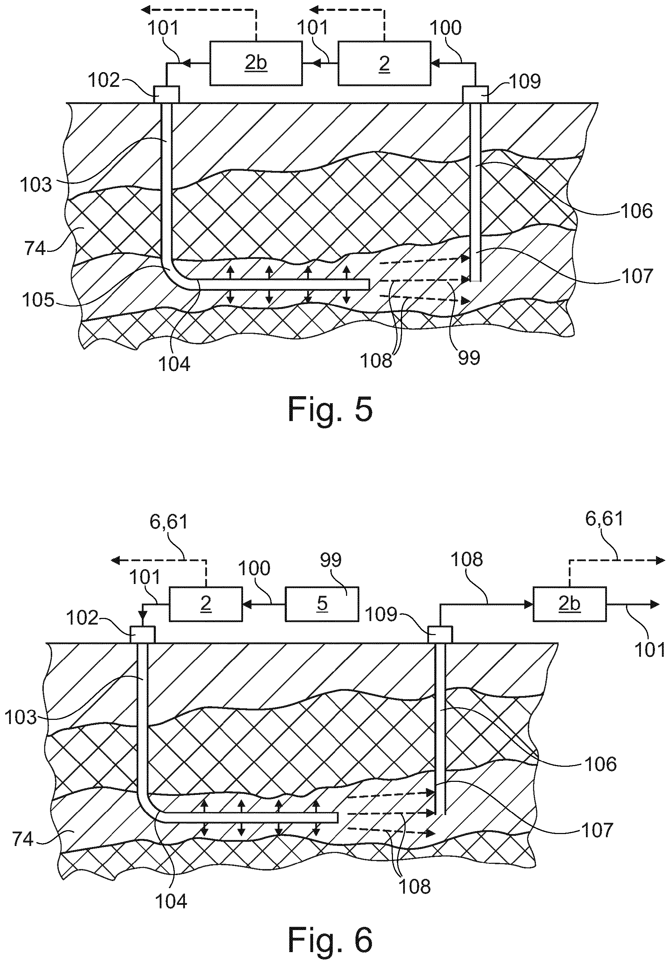

Figure 5 shows a further embodiment of the invention, which, in contrast to the embodiment disclosed in figure 3, comprises two SOFC systems 2, 2b, where the anode exhaust stream 101 of the first SOFC system 2 is fed to the input of the second SOFC system 2b, and the anode exhaust stream 101 of the second SOFC system 2b forming the injection gas 105. One advantage of the two SOFC systems 2, 2b in series is that the CO₂ content in the anode exhaust stream 101 of the second SOFC system 2b is increased which, beside steam consists mostly of CO₂. Most advantageously steam is removed and the injection gas 105 consisting mostly of CO₂ is injected into the coal bed 74. Most advantageously, both SOFC systems 2, 2b have an electrical output 61 and produce electricity 6.

Figure 6 shows a further embodiment of the invention which, in contrast to the embodiment disclosed in figure 1, comprises a second SOFC system 2b that converts the production gas 108 into an anode exhaust stream 101 and electricity 6. The electricity 6 produced by the first and second SOFC system 2, 2b is CO₂ neutral because the gaseous hydrocarbon feed 100 is produced from a biogas reactor 5, which means the gaseous hydrocarbon feed 100 is biogas. Taking into account that a minimum of two CO₂ molecules are needed to displace one CH₄ molecule and adsorb on the coal surface permanently in its place, the electricity produced with an embodiment according to figure 6 is CO₂ negative, even though the anode exhaust stream 101 of the second SOFC system 2b is released into the atmosphere because the method allows to remove and sequester two CO₂ molecules, but only one CO₂ molecule is released to the atmosphere.

Figure 7 shows a top view of a system 1 for removing CO₂ and for producing CBM. An anode exhaust stream 101 from a single SOFC system 2 is fed as injection gas 105 through pipelines 114 into a plurality of first well heads 102a, 102b, 102c, 102d, the injection gas 105 is flowing through the coal bed 72 and is converted into production gas 108, and the production gas 108 is collected at a single second well head 109, and is then fed through a pipeline 115 to the single SOFC system 2. Such a system is in particular useful if a mobile SOFC system 2 is used that works autonomously and that can be parked anywhere. Most preferably the single SOFC system 2 is a closed loop system as disclosed in figure 3, so that the electrical energy 6 may be harvested by the use of an electric line. The electric line is cheap to build, also over long distances and the single SOFC system 2 can be installed in any suitable location.

Figure 8 shows an exemplary embodiment of an SOFC system 2 comprising a solid oxide fuel cell 2a. The SOFC system 2 allows producing an anode exhaust stream 101 comprising CO₂ as well as producing electricity 6 from a gaseous hydrocarbon feed 100, such as biogas, CBM or natural gas. The gaseous hydrocarbon feed 100 is preferably entering a fuel pre-treatment unit 110, and the pretreated gaseous hydrocarbon feed 100b is heated in heat exchanger 2d and fed into a reformer 2c. In addition, steam 200 is fed into a reformer 2c, the reformer 2c producing a reformed process gas feed 100c typically consisting of CO, CO₂, H₂O and H₂, whereby the reformed process gas feed 100c is heated in heat exchanger 2e, and the heated reformed process gas feed is fed to the anode side 2f of the solid oxide fuel cell 2a, wherein the reaction takes place. The anode exhaust stream 101 may be used as the injection gas 105, as for example disclosed in figures 1 and 3.

In a further advantageous embodiment, as disclosed in figure 8, the anode exhaust stream 101 may be cooled down in heat exchanger 2g, and may be fed into a high temperature water-gas-shift reactor 2h, and may then be cooled in heat exchanger 2i and fed into a low-temperature water-gas-shift membrane reactor 2k. The gas entering the low temperature water-gas-shift membrane reactor 2k is depleted of hydrogen 201 so that a carbon dioxide rich gas stream 100d results, which is cooled in heat exchanger 21 and is fed to a CO₂ conditioning unit 2m, which at least separates water 202 from the carbon dioxide rich gas stream 100d, so that a carbon dioxide rich gas stream 100e results, which may be used as injection gas 105.

The solid oxide fuel cell 2a also comprises a cathode side 2m and a membrane 2n, the membrane 2n being connected with an electrical output 61 for transferring electricity 6. Most preferably ambient air 120 is heated in heat exchanger 2o, and is then fed into the cathode side 2m of the solid oxide fuel cell 2a. An oxygen-depleted air stream 121, which is the cathode off gas, is cooled in heat exchanger 2p and is vented as depleted air stream 121. Document WO2015124700A1, which is herewith incorporated by reference, discloses further exemplary embodiments suitable for producing an anode exhaust stream 101 which may be used as injection gas 105 for CBM production.

In a preferred embodiment at least part of the depleted air stream 121, which contains a high amount of N₂, may be mixed with the anode exhaust stream 101, to control the amount of CO₂ and N₂ in the injection gas 105.

## Claims

1. A method for removing CO₂ comprising the steps of,
feeding a solid oxide fuel cell SOFC system (2) with a gaseous hydrocarbon feed (100),
converting the gaseous hydrocarbon feed (100) in the SOFC system (2) into an anode exhaust stream (101) comprising carbon dioxide CO₂, the SOFC system (2) thereby producing electricity (6);
injecting the anode exhaust stream (101) as an injection gas (105) into an underground coal bed (74);
in the underground coal bed (74) the injection gas (105) causing coal bed methane (CBM) to desorb from the coal and CO₂ to adsorb onto the coal;
extracting the coal bed methane (CBM) from the underground coal bed (74);
and discharging a production gas (108) comprising the coal bed methane (CBM) from the underground coal bed (74).

2. The method of claim 1, wherein the gaseous hydrocarbon feed (100) consisting at least of biogas.

3. The method of claim 2, comprising the steps of,
sequestering atmospheric carbon dioxide by a biomass, converting the biomass to biogas, and feeding the biogas as the gaseous hydrocarbon feed (100) to the SOFC system (2).

4. The method of one of claims 1 to 3, comprising the step of feeding the production gas (108) as the gaseous hydrocarbon feed (100) to the SOFC system (2).

5. The method of one of claims 1 to 3, comprising the step of feeding the production gas (108) in a public gas grid (113).

6. The method of one of the preceding claims, comprising the steps of,
consuming the anode exhaust stream (101) with a controlled amount of air to thereby control the amount of CO₂ and nitrogen N₂ in a consumed anode exhaust stream (101a), and injecting the consumed exhaust stream (101a) as the injection gas (105) into the underground coal bed (74).

7. The method of one of claims 1 to 5, comprising the steps of consuming the anode exhaust stream (101) with a controlled amount of a cathode off gas (121) of the SOFC system (2), to thereby control the amount of CO₂ and nitrogen N₂ in a consumed anode exhaust stream (101a), and
injecting the consumed exhaust stream (101a) as the injection gas (105) into the underground coal bed (74).

8. The method of one of the preceding claims, comprising the steps of
feeding the anode exhaust stream (101) of the SOFC system (2) into a second SOFC system (2a),
converting the anode exhaust stream (101) in the second SOFC system (2a) into a CO₂ enriched anode exhaust stream (101b), and
injecting the carbon dioxide enriched anode exhaust stream (101b) as the injection gas (105) into the underground coal bed (74).

9. The method of one of claims 6 or 7, comprising the step of adapting the ratio of N₂ to CO₂ in the anode exhaust stream (101) depending on a coal quality of the underground coal bed (74).

10. The method of claim 9, comprising the step of adapting the ratio of N₂ to CO₂ in the injection gas (105) in the range of between 20% N₂, 80% CO₂ and 45% N₂, 55% CO₂.

11. System (1) for removing CO₂ comprising a gaseous hydrocarbon source (99), a first well (103), a second well (108), and an SOFC system (2) comprising a solid oxide fuel cell (2a) with an anode side (2f), a cathode side (2m) and an electrical output (61), wherein the first well (103) fluidly connecting an inlet (103a) with a coal bed (74), wherein the second well (108) fluidly connecting the coal bed (74) with an outlet (106a), wherein the output of the anode side (2f) of the Solid oxide fuel cell (2a) is fluidly connected with the inlet (103a), to provide the coal bed (74) with CO₂, and wherein the input of the anode side (2f) is fluidly connected with the gaseous hydrocarbon source (99).

12. The system of claim 11, wherein a biogas reactor (5) forms the gaseous hydrocarbon source (99).

13. The system of claim 12, wherein the outlet (106a) is fluidly connected with a public gas grid (113).

14. The system of claim 12, wherein the outlet (106a) is fluidly connected with the input of the anode side (2f) for fluidly connecting the coal beds (74) with the anode side (2f), wherein coal bed methane (CBM) of the coal bed (74) forms the gaseous hydrocarbon source (99).

15. Use of a system according to one of claims 11 to 14 for extracting coal bed methane (CBM) from coal beds, preferably from non-minable coal beds.
